(19) Europäisches Patentamt
European Patent Office
Office européen des brevets

(11) EP 0 953 595 A1

(12) EUROPEAN PATENT APPLICATION

(43) Date of publication:
**03.11.1999 Bulletin 1999/44**

(21) Application number: **98303247.5**

(22) Date of filing: **27.04.1998**

(51) Int. Cl.$^6$: **C08K 5/00**, C08L 67/02
// (C08K5/00, 5:13, 5:3475, 5:3435)

(84) Designated Contracting States:
**AT BE CH CY DE DK ES FI FR GB GR IE IT LI LU MC NL PT SE**
Designated Extension States:
**AL LT LV MK RO SI**

(71) Applicant:
**HOECHST CELANESE CORPORATION**
**Summerville, New Jersey 08876 (US)**

(72) Inventor: **Mulholland, Bruce M.**
**Hebron, Boone, Kentucky 41048 (US)**

(74) Representative:
**De Minvielle-Devaux, Ian Benedict Peter et al**
**CARPMAELS & RANSFORD**
**43, Bloomsbury Square**
**London WC1A 2RA (GB)**

# (54) UV light stabilized polyester molding composition

(57) A UV stabilized thermoplastic polyester molding composition characterized as containing a polyester and a UV light stabilizing system characterized as an effective amount of a hindered amine, a benzotriazole or benzophenone compound, and an antioxidant to achieve acceptable UV exposure results when the composition is exposed in a Xenon arc weatherometer operated according to SAE J1885. The composition and molded parts therefrom exhibit improved color difference, as calculated in CIELab units under illumination "D-65" according to ASTM Standard D-2244, of less than about 2.20 when exposed to 601.6 kJ/m$^2$ irradiation, and improved surface gloss retention characteristics after exposure.

EP 0 953 595 A1

## Description

### Field of the Invention

The present invention relates to ultra-violet (UV) stabilized thermoplastic polyester molding compositions suitable for the preparation of shaped articles. Polyester resins is combined with a UV light stabilizing system containing a hindered amine light stabilizer and a UV light absorber to prepare the molding composition. Molded articles prepared from the composition exhibit enhanced stability against color degradation and loss of gloss caused by continuous UV light exposure.

### Background of the Invention

The automobile industry have been painting parts molded from a number of different polymer systems including polyester resins for a number of years. Historically, all of these polymers have not possessed sufficient UV light stability to allow elimination of the painting process. The applied layer of paint and optional UV coatings protected the polymer from UV degradation which resulted an objectionable color and surface gloss degradation. The industry has been interested in eliminating the painting process to reduce costs as well as decrease air emissions due to use of paints and solvents.

Polyester resins, e.g. copolyester elastomers, polyalkylene terephthalates, etc., have been known to degrade when exposed to UV light for long periods of time. This degradation typically manifests itself in the form of a distinct and objectionable, color change from the desired color of molded articles. Specifically, when exposed to UV light and other environmental factors found inside an automobile, the color of polyester resins usually degrade from the initial color to one which is distinctly a discolored yellow to yellow-brown. This UV-induced discoloration has required the auto industry to continue painting parts in an attempt to prevent color degradation and loss of gloss or to select alternate polymer systems which possess desired performance characteristics critical for UV exposure applications.

There is a desire for a UV light stabilizing system which when combined with polyester resins will eliminate the need to apply surface paints and additives to molded parts for the prevention of color degradation and loss of gloss. Such a stabilizing system should require the addition of small amount thereof to be combined with the polyesters so as not to adversely affect physical properties or molding characteristics of the composition.

### Summary of the Invention

The present invention is directed to an ultraviolet light stabilized molding composition, comprising a thermoplastic polyester resin and a UV light stabilizing system which in combination with the polyester resin in an effective amount is sufficient to achieve a color difference, as calculated in CIELab units under illuminant "D-65" according to ASTM Standard D-2244 of less than about 2.25 when exposed to 601.6 kJ/$m^2$ irradiation in a Xenon arc weatherometer operated according to SAE J1885, and exhibits a surface gloss retention after irradiation of at least about 7.5 %, wherein said stabilizing system includes:

(i) an ultra-violet light absorber,

(ii) a hindered amine light stabilizer; and

(iii) an antioxidant.

The composition is suitable for the preparation of molded articles for the automobile industry such as auto interior parts, e.g. dash board controls, dash mounted and side impact airbag covers, etc., which can withstand color change, loss of gloss and surface deterioration when exposed to extreme UV lighting conditions for long periods of time.

### <u>Detailed Description of the Invention</u>

In accordance with the present invention, there is described a thermoplastic polyester molding compositions, characterized as containing a polyester resin and a UV light stabilizing system suitable for the preparation of molded articles resistant to degradation and color change when exposed to UV light for prolonged periods of time. The polyester resin may be characterized as containing polyalkylene terephthalates, copolyester elastomers and, optionally, polycarbonates, or blends thereof. The UV light stabilizing system which is added to the polyester resin may he characterized as containing a hindered amine light stabilizer and a UV light stabilizer. In addition to the stabilizing system, the composition may also contain an antioxidant and other additive components known in the art.

Copolyester Elastomers

A preferred class of thermoplastic polyesters suitable for use in the present invention are copolyester elastomers, e.g., copolyetheresters. The copolyester elastomers are characterized by a multiplicity of recurring intra linear long chain and short chain ester units connected head-to-tail through ester linkages. The linkage chain ester units are represented by at least one of the following structures:

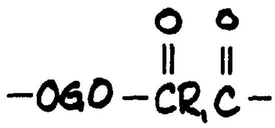 and 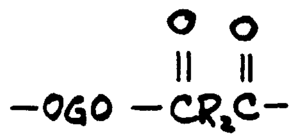 (I)

(a) (b)

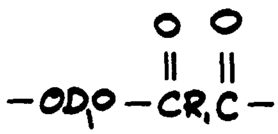 ; 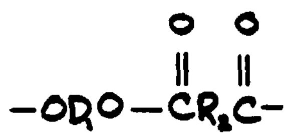 (II)

(c) (d)

whereas the short chain ester units are represented by at least one of the following structures:

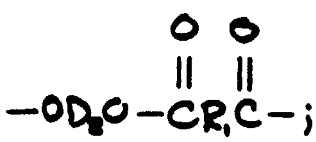 ; and 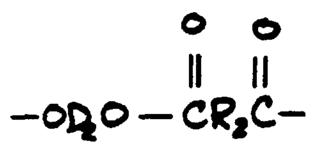

(e) (f)

wherein

(i) G is a divalent radical remaining after removal of terminal hydroxyl groups from a long chain polymeric glycol, having a molecular weight of about 600 and a melting point below about 55°C;

(ii) $R_1$ and $R_2$ are different divalent radicals remaining after removal of carboxyl groups from different dicarboxylic acids each having a molecular weight less than about 300; and

(iii) $D_1$ and $D_2$ are different divalent radicals remaining after removal of hydroxyl groups from different low molecular weight diols, having a molecular weight less than about 250.

The "short chain ester units" in the copolyetherester provide about 25 to 95 wt% of the copolyetherester, and about 50 to 100 wt% of the short chain ester units in the copolyetherester may be identical. The term "long chain ester unit" as applied to units in a polymer chain, refer to the reaction product of a long chain glycol with a dicarboxylic acid. Such as "long chain ester units" which are repeating units in the copolyester elastomer, correspond to the Formula I(a) or I(b) above. The long chain glycols are polymeric glycols having terminal (or nearly terminal) hydroxy groups and a molecular weight from about 600 to about 6,000. The long chain glycols used to prepare the copolyesters of the invention are generally poly(alkylene oxide) glycols or glycol esters of poly(alkylene oxide) dicarboxylic acids. The chemical structure of the long chain polymeric part of the long chain glycol is not critical and any substituent groups can be present which do not interfere with polymerization of the compound with glycol(s) or dicarboxylic acid(s) to form the polyesters of the invention. This, the chain can be a single divalent acrylic, alicyclic, or aromatic hydrocarbon group,

poly(alkylene oxide) group, polyester group, a combination thereof; or the like which meets the other requirements set forth herein. Any of these may contain substituents which do not substantially interfere with polymerization to form the copolyester. The term "short chain ester units" as applied to units in a polyester chain refers to low molecular weight compounds or polymer chain units having molecular weights less than about 550. They are made by reacting a low molecular weight diol, e.g below about 250, with a dicarboxylic acid to form a repeating unit corresponding to the Formula I(c), (d), (e) or (f) above. The term 'dicarboxylic acid" as used herein includes the condensation polymerization equivalents of dicarboxylic acids, i.e. their esters or ester-forming derivatives such as acid chlorides and anhydrides, or derivatives thereof which behave substantially like dicarboxylic acids in polymerization reactions with a glycol.

The copolyesters suitable in the composition of this invention may be prepared by polymerizing with each other (a) one or more dicarboxylic acids or their equivalents (and esters or ester-forming derivatives such as acid chlorides, anhydrides, etc.); (b) one or more linear long chain glycols; and (c) one or more low molecular weight diols. The polymerization reaction can be effected by conventional procedures, e.g. in bulk or in a solvent medium which dissolves one or more of the monomers.

The "dicarboxylic acid monomers" useful herein have a molecular weight less than about 300, e.g. aromatic, aliphatic or cycloaliphatic. The dicarboxylic acids can contain any substituent groups or combination thereof which do not interfere with the polymerization reaction. Representative dicarboxylic acids include terephthalic and isophthalic acids, bibenzoic acid, substituted dicarboxy compounds with benzene nuclei such as bis(p-carboxyphenyl) methane, p-oxy-(p-carboxyphenyl) benzoic acid, 2,7-naphthalene dicarboxylic acid, phenanthralene dicarboxylic acid, anthralene dicarboxylic acid, 4,4'-sulfonyl dibenzioc acid, etc., and $C_1$-$C_{10}$ alkyl or other ring substitution derivatives thereof such as halo, alkoxy or aryl derivatives. Hydroxy acids such as p(β-hydroxyethoxy) benzoic acid can also be used providing an aromatic dicarboxylic acid is also present.

"Aromatic dicarboxylic acids are dicarboxylic acids in which each carboxy group is attached to a carbon atom in an isolated or fused benzene ring such as those mentioned above. "Aliphatic dicarboxylic acids" are acids in which each carboxy group is attached to a fully saturated carbon atom or to a carbon atom which is part of an olefinic double bond. If the carbon atom is in a ring, then acid is cycloaliphatic, if not, then acid is aliphatic. Representative aliphatic and cycloaliphatic acids are sebacic acid, 1,3- or 1,4-cyclohexane dicarboxylic acid, adipic acid, glutaric acid, succinic acid, carbonic acid, oxalic acid, itaconic acid, azelaic acid, diethylmalonic acid, fumaric acid, citraconic acid, allylmalinate acid, 4-cyclohexene-1,2-dicarboxylate acid, pimelic acid, subetic acid, 2,5-diethyladipic acid, 2-ethylsuberic acid, 2,2,3,3-tetramethylsuccinic acid, cyclopentane dicarboxylic acid, decahydro-1,5-(or 2,6-) naphthylic acid, the different isomers should be considered as different compounds forming different short chain ester units with the same diol in the copolyesters.

Generally, short chain ester units of Formula II should contribute from about 25 to about 95 wt% of the copolyester, with from about 50 to about 100% of the total short chain ester units being identical, i.e. the reaction product of a single low molecular weight dicarboxylic acid with a single low molecular weight diol. The short chain ester units will normally be distributed statistically throughout the backbone of the polyester.

The copolyester elastomer may be prepared by conventional ester interchange reaction. A preferred procedure involves heating the dimethyl ester of terephthalic acid or a mixture of terephthalic and isophthalic acids with a long chain glycol and a molar excess of at least one of butanediol and butenediol in the presence of a catalyst at a temperature of from about 50° to about 260°C followed by removal of the methanol formed by the interchange by distillation. Heating is continued until methanol evolution is complete. Depending upon reaction temperature, the catalyst and glycol excess, the polymerization may be completed within minutes to a few hours. This procedure results in the preparation of a low molecular weight pre-polymer which may be carried to a high molecular weight copolyester by distillation of the excess short chain diol in a conventional polycondensation reaction. Additional ester interchange occurs during the distillation to increase the molecular weight and to randomize the arrangement of the copolyester units. Best results are usually obtained if this final distillation or polycondensation is run at a pressure of less than 1mm and a temperature of from about 225° to 260°C for less than about 2 hours in the prensence of antioxidants such as sym-di-beta-naphthyl-p-phenylenediamine and 1,3,5-trimethy-2,4-tris-(3,5-ditertiary-butyl-4-hydroxybenzyl)benzene. Most practical polymerization techniques rely upon ester interchange to complete the polymerization reaction. In order to avoid excessive reaction time at high temperatures with possible irreversible thermal degradation, it is advantageous to employ a catalyst for ester interchange reactions. While a wide variety of catalysts may be used, organic titanates such as tetrabutyl titanate or tetraisopropyl titanate used alone or in combination with magnesium or calcium acetates are preferred. Complex titanates, such as derived of alkali or alkaline earth metal alkoxides and titanates esters are also very effective. Inorganic titanates, such as lanthanum titanate, calcium acetate/antimony trioxide mixtures and lithium and magnesium alkoxides are representative of the catalysts which may be used.

Prepolymers may also be prepared by a number of alternate esterification or ester interchange processes. For example, the long chain glycol may be reacted with a high or low molecular weight short chain ester homopolymer or copolymer in the presence of a catalyst until randomization occurs. The short chain ester homopolymer or copolymer may be prepared by ester interchange from either the dimethyl esters and low molecular weight diols, as above, or from

the free acids with the diol acetates. Alternatively, the short chain ester copolymer may be prepared by direct esterification from appropriate acids, anhydrides or acid chlorides, for example, with diols or by other processes such as reaction of the acids with cyclic ethers or carbonates. Obviously the prepolymer might also be prepared by running these processes in the presence of the long chain glycol.

Ester interchange polymerizations are generally run in the melt without added solvents, however, inert solvents may be used to facilitate removal of volatile components from the mass at low temperatures. This technique is especially valuable during prepolymer preparation, e.g. by direct esterification. However, certain low molecular weight diols such as butanediol in terphenyl, are conveniently removed during high polymerization by azeotropic distillation. Other special polymerization techniques, for example, interfacial polymerization of bisphenol with bisacylhalides and bisacylhalide capped linear diols, may prove useful for preparation of specific polymers. Both batch and continuous methods may be used for any stage of copolyester polymer preparation. Polycondensation of prepolymers may also be accomplished in the solid phase by heating finely divided solid prepolymers in a vacuum or stream of inert gas to remove liberated low molecular weight diols. This method has the advantage of reducing degradation because it must be used at temperatures below the softening point of the prepolymer. The major disadvantage is the long time required to react a given degree of polymerization.

Polyalkylene Terephthalates

Another class of polyesters which may be useful to form the UV light stabilized thermoplastic molding composition of the invention are linear polyalkylene terephthalates, generally polyethylene terephthalate (PET), polypropylene terephthalate (PPT), polybutylene terephthalate (PBT), and ethylene-1,4-cyclohexylenedimethylene terephthalate (PETG). Of these, polybutylene terephthalate (PBT) is especially preferred. Polybutylene terephthalate may be prepared in a conventional manner such as by transesterification and polycondensation of dimethyl terephthalate or terephthalic acid or its lower alcohol ester and 1,4-butanediol. The polybutylene terephthalate base polymer is not limited strictly to PBT homopolymers, but also includes copolymers mainly comprising of polybutylene terephthalate units. The term "copolymer" as used herein thus refers to polymers obtained by the polycondensation of terephthalic acid or its lower alcohol ester as the main dibasic acid component with 1,4-butanediol as the main glycol component in the presence of 40 molar % or less of an ester-forming monomer. The comonomer components usable herein include dibasic acid components such as isophthalic acid, orthophthalic acid as well as their lower alcohol esters; and glycol components such as ordinary alkylene glycols other than 1,4-butanediol, e.g. ethylene glycol, diethylene glycol, propylene glycol, trimethylene glycol, hexamethylene glycol, neopentyl glycol and cyclohexanedimethanol as well as aromatic diols, e.g. bisphenol A and ethylene oxide (2 mol) adduct of bisphenol A. Hydroxy acids such as hydrooxybenzoic acid and hydroxynaphthoic acid and their ester-forming derivatives may also be used as suitable comonomers. Intrinsic viscosity (IV) and melt index of the PBT are not critical and variations in melt index of either the PBT or the elastomer do not appear to affect the mechanical properties of compositions of the invention, however, a typical IV will be within the range of from about 0.7 to about 2.0. Typicaily, PBT useful herein has a melt index of from about 6 to about 90 by ASTM Method D-1238 at 250°C employing a load of 2160 g and an intrinsic viscosity from about 0.6 and about 1.2 dl/g as measured in orthochlorophenol at 25°C.

Polycarbonates

Optionally, a polycarbonate may be combined with the thermoplastic polyester resin of the invention. The polycarbonate may be added to the individual polymers or the a blend thereof. The polycarbonate resin of the invention may be homogeneously blended with the polyester and polyalkylene terephthalates. The polycarbonate may be prepared by reaction of a dihydric phenol with a carbonate precursor, such as phosgene, or transesterification of a dihydric phenol with a carbonate precusor, such as diphenyl carbonate, in a solvent, such as methylene chloride, in the presence of a known acid acceptor and a molecular weight modifier.

Suitable examples of the dihydric phenol include bisphenols, among which 2,2-bis(4-hydroxyphenyl)-propane, i.e., bisphenol A is particularly preferred. The bisphenol A may be partly or wholly substituted with other dihydric phenols. Examples of the dihydric phenols other than bisphenol A include compounds such as hydroquinone, 4,4-dihydroxydiphenyl, bis(4-hydroxyphenyl)alkane, bis(4-hydroxyphenyl)cycloalkane, bis(4-hydroxyphenyl)sulfide, bis(4-hydroxyphenyl)sulfone, bis(4-hydroxyphenyl)sulfoxide, and bis(4-hydroxyphenyl)ether, and halogenated bisphenols, such as bis(3,5-dibromo-4-hydroxyphenyl)propane and bis(3,5-dichloro-4-hydroxyphenyl)propane. The dihydric phenol may be a homopolymer of a dihydric phenol, or a copolymer of two or more of the same. Furthermore, the polycarbonate resin used in the invention may be a thermoplastic, randomly branched polycarbonate prepared by reacting a polyfunctional aromatic compound with a dihydric phenol and/or a carbonate precursor.

The polycarbonate suitable for use in the invention should exhibit an IV (at 20 in methyl chloride) of at least about 0.4 or greater.

Generally, the thermoplastic polyester resin of the invention may contain from 0 to about 30 wt% of polyalkylene terephthalate, from about 35 to about 70 wt% of polyester elastomer, from 0 to about 30 wt% of polycarbonate, from about 10 to about 50 wt% of MBS, and from about 0.2 to about 1.0 wt% of an antioxidant. Typically, the polyester composition of the invention will contain from 0 to about 30 wt% of polyalkylene terephthalate, from about 55 to about 65 wt% of polyester elastomer, from 0 to about 15 wt% of polycarbonate, from about 15 to about 45 wt% of MBS, and from about 0.2 to about 0.8 wt% of the antioxidant; preferably, from 0 to about 25 wt% of the polyalkylene terephthalate, about 60 wt% of the polyester elastomer, from 0 to about 10 wt% of polycarbonate, from about 20 to about 40 wt% of MBS, and about 0.6 wt% of the antioxidant, based on the total weight of the composition.

UV Light Stabilizing System

The UV light stabilizing system of the invention will contain a hindered amine light stabilizer, a UV light absorber, and an antioxidant. The components of the stabilizer system may be combined together and afterwards added to the polymeric resins, or the components may be blended directly into the polymeric resins. Thermoplastic polyester resins of the invention have significantly increased UV light stability and weatherability when combined with the UV light stabilizer system described herein.

The UV light stabilizing system will include a UV light absorber compatible with the composition which is sufficient to achieve an acceptable LW exposure results when exposed in the Xenon arc weatherometer operated according to SAE J1885. Generally, UV light absorbers are based upon benzophenones of the formula:

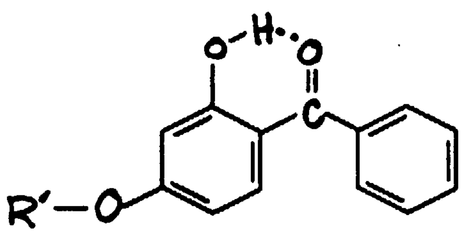

(IV)

where R' is hydrogen or an alkyl radical of 1 to 8 carbons. More particularly, the benzophenones are 2-hydroxybenzophenones such as 2,4-dihydroxybenzophenone; 2-hydroxy-4-methoxybenzophenone; 2-hydroxy-4-tertbutoxybenzophenone; 2-hydroxy-4-octoxybenzophenone; 2-hydroxy-4-dodecycloxybenzophenone; 2-hydroxy-4-stearoxybenzophenone; 2-hydroxy-4-phenoxybenzophenone; 2-hydroxy-4-(β-hydroxyethoxy)benzophenone; 2-hydroxy-4-(2'-hydroxy-3'-acryloxypropoxy)benzophenone; 2-hydroxy-4-(2'-hydroxy-3'-methacryloxypropoxyl)benzophenone; 2,2'-dihydroxybenzophenone; 2,2-dihydroxy-4-methoxybenzophenone; 2,2'-dihydroxy-4-butoxyobenzophenone; 2,2'-dihydroxy-4-octoxybenzophenone; 2,2'-dihydroxy-4-lauroxybenzophenone; 2,2',4,4-tetrahydroxybenzophenone; 2,2',4'-trihydro-4-methoxybenzophenone; 2-hydroxy-4-methoxy-4'-chlorobenzophenone; 2,2'-dihydroxy-4,4'-dimethyloxybenzophenone; 2-hydroxy-4-methoxy-2'-methyl-4'-hydroxybenzophenone; 2-hydroxy-4'-methoxy-4-tert-butylbenzophenone; 2-hydroxy-4-methoxy-4'-methyl-benzophenone; 2-hydroxy-4,4'-dimethoxybenzophenone; 2-hydrox-4,4,2'-trimethoxybenzophenone; 2-hydroxy-4-N-octoxybenzophenone, etc.

The UV light absorbers are also based upon benzotriazoles, and more particularly 2-hydroxybenzotriazioes such as 2-(2'-hydroxy-5'-methylphenyl)benzotriazlole; 2-(2'-hydroxy-3'-5'-di-tert-butylphenyl)benzotriazole; 2-(2'-hydroxy-3'-5'-di-tert-butylphenyl)-5-chlorobenzotriazole; 2-(2'-hydroxy-3',5'-diphenyl-)-5-benzotriazole; 2-(2'-hydroxy-3'-tertbutyl-5'-methylphenyl)-5-chlorobenzotriazole; 2-(2'-hydroxy-5'-tertbutyl-5'-methylphenyl)benzotriazole; 2-(2'-hydroxy-3'-secbutyl-5'-tertbutylphenyl)benzotriazole; 2-(2'-hydroxy-5-tert-octylphenyl)benzotriazole; 2-(2H-benzotriazol-2-yl)-4,6-bis(1-methyl-1-phenylethyl)-pheniol; 2-(3',5'-bis(1-methyl-1-phenylethyl)-2'-hydroxyphenyl)benzotriazole, etc.

Generally, the effective amount of UV light absorber in the molding composition includes from about 0.5 to about 5 wt%, based on the total weight of the composition. Commercially available benzotriazoles useful in the invention include Cyasorb® UV 5411- 2-(2-hydroxy-5-t-octylphenyl)-benzotriazole available from American Cyanamid Company, and Tinuvin® 234-2-(3,5'-bis(1-methyl-1-phenylethyl)-2'-hydroxyphenyl)benzotriazole available from Ciba-Geigy Corporation. Commercially available benzophenones useful in the invention include Cyasorb®UV531- 2-hydroxy-4-N-octoxybenzophenone from American Cyanamid Company.

The hindered amine light stabilizers (HALS) useful in the UV light stabilizing system include 1,1'-[1,2-ethanediyl]-bis(3,3,5,5-tetramethylpoperazione]; dimethlysuccinate polymer with 4-hydroxy-2,2,6,6-tetramethyl-1-piperdine ethanol; bis(1,2,2,6,6-pentamethyl-4-piperdinyl)-sebacate; bis(2,2,6,6-tetramethyl-4-piperidinyl]decanedioate; bis(1,2,2,6,6-pentamethyl-4-piperidinyl)-2-[[3,5-bis(1,1-dimethylethyl)-4-hydroyphenyl]methyl]-2-butylpropanedioate;

poly[(2,2,6,6-tetramethyl-4-piperidinyl)iminomethylene(2,2,6,6-tetramethyl-4-piperidinyl)imino[6(octylamino)-1,3,5-triazine-4,2-diyl]]; 2,2,6,6-tetramethyl-4-piperidinyl benzoate; tetrakis(2,2,6,6-tetramethyl-4-pipendinyloxy)silane and the like. Commercially available HALS preferred for the invention include Tinuvin® 144- bis(1,2,2,6,6-pentamethyl-4-piperidinyl)-(3,5-di-tert-butyl-4-hydroxybenzyl)butylpropanedioate, Hostavin® N20 and Hostavin® N30- high melt polymeric/oligomeric hindered amine light stabilizers commerciaily available from Hoechst AG, Frankfurt am Main, Germany; Sanol® LS770- 2,2,6,6-tetramethylpiperidine; Goodrite 3150-a

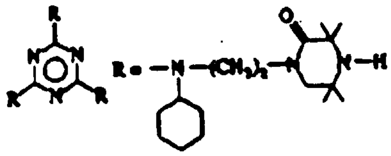

hindered amine light stabilizer available from B. F. Goodrich; and Adka Stab LA63-[1,2,2,6,6-pentamethyl-4-piperidy/β,β,β',β'-tetramethyl-3,9-(2,4,8,10-tetraoxaspiro(5,5)undecane)diethyl]-1,2,3,4-butanetetracarboxylate.

Generally, an effective amount of HALS will be included within the UV light stabilizing system to provide protection from surface degradation of the thermoplastic polyester resin as a result of UV light exposure. An effective amount of HALS in the molding composition includes from about 0.5 to about 5 wt%, based on the total weight of the composition. Typically, the relative ratio of about 1:1 to about 1:2 HALS:UVA, respectively, will be included in the stabilized system, and a preferred ratio of about 1:1 HALS:UVA.

The UV light stabilizing system of the present invention will also contain from about 0.5 to about 1.5 wt%, based on the total weight of the composition of an antioxidant. Typically antioxidants are tetrakis[methylene(3,5-di-t-butyl-4-hydroxyhydrocinnamate)] methane, commercially available as Irganox 1010 from Ciba Geigy Corporation, and (tetrakis(2,4-di-tert-butylphenyl)4,4-biphenyldiphosphonite] commercially available as Sandostab P-EPQ available from Sandoz.

Additionally, lubricants, fillers include minerals, e.g., talc, calcium carbonate, mica, etc., mold release agents, plasticizers, nucleating agents, impact modifiers, pigments and colorants; continuous length of reinforcing fiber stands selected from the group consisting of glass, amorphous carbon, graphitic carbon, aramids, stainless steel, ceramics, alumina, titanium, magnesium, metal-coated carbons, rock wool and combinations thereof.

Examples

The following examples are presented as specific illustrations of the claimed invention. It should be understood, however, that the invention is not limited to the specific details set forth in the examples. Polyester resins were preblended in dry form with various additives and post blended prior to molding as shown in the following Tables. The dry blends were then extruded and pelletized via single screw or twin-screw extruders operated from about 100 to about 150 rpms and a temperature of about 300°C. The pelietized samples were injection molded into test plaques on a Van-Dorn using a barrel temperature of about 470°F an a mold temperature of about 180°F.

These test plaques were employed to determine the physical properties of the polyester resin compositions, particularly with respect to "color difference" and "percent gloss retention". In this regard, the "color difference' data in the following Tables 1 and 2 were obtained by exposing the test plaques to UV light and heat in a Xenon arc weatherometer which was operated according to automotive test procedures SAE J1885.

| SAE J1885 Conditions | Light Cycle | Dark Cycle |
|---|---|---|
| Irradition, $W/m^2$ | 0.55 | - |
| Black Panel Temperature, °C | 89 | 38 |
| Relative Humidity, % | 50 | 95 |
| Cycle Time, Hours | 3.8 | 1.0 |

The amount of exposure was measured in terms of the total irradiation the test plaques received, expressed in kilojoules per square meter ($kJ/m^2$).

The degree of color change was determined instrumentally by measuring the color of the exposed specimens

versus the color of the unexposed specimen. The degree of color change was quantified as the total color difference (delta E*), calculated in all cases for illuminant "D-65", 10-degree observer, specular included, expressed in CIELab units, in accordance with ASTM D-2244. When values L, a and b of the Hunter colorimetric system are measured and the color difference value, ΔE of the polyester composition of the invention is may be calculated from the equation:

$$\Delta E = [(L-L_0)^2+(a-a_0)^2+(b-b_0)^2]^{1/2}$$

wherein $L_0$, $a_0$, and $b_0$ are measured values of the color before irradiation and L, a and b are measured those values after irradiation, and wherein $\Delta L=L-L_0$ is the difference in lightness and darkness between the exposed and unexposed samples, $\Delta a=a-a_0$ is the difference in redness and greenness of the exposed and unexposed samples, and $\Delta b=b-b_0$ is the difference in yellowness and blueness of the exposed and unexposed samples. The "percent gloss retention" (60° Gloss %) is determined by measuring the 60-degree gloss of the test plaques prior and subsequent to exposure to the Xenon arc weatherometer using a Gardner Multi-Angle gloss meter operated according to ASTM 523. The gloss retention of each of the test plaques was therefore obtained by dividing the gloss measurement of the exposed specimen by the gloss measurement of the unexposed specimen, with the resulting number being expressed as a percentage.

Example 1

Various amounts of components of the stabilizer system were incorporated into a polyester resin, characterized as containing about 25 wt% of polybutylene terephthalate, about 15 wt% of copolyester elastomer, about 30 wt% of an olefinic elastomer, about 30 wt% of MBS, about 0.1 wt% of Irganox 1010, and about 0.2 wt% of Irgaphos. Samples 1 through 16 were prepared by mixing the quantity of components, measured in grams, according to the procedure above. Colorant, MC3123K20 39292-04-21, was utilized in addition to a number of UV-light absorbers and HALS to prepare the sample.

| Sample 1 | |
|---|---|
| Polyester | 2000.0 g |
| MC3123K20 39292-04-21 | 00.0 g |

| Sample 2 | |
|---|---|
| Polyester | 1979.0g |
| MC3123K2029292-04-21 | 00.0g |
| Cyasorb UV5411 | 0.5 g |
| Sanol LS770 | 10.5 g |

| Sample 3 | |
|---|---|
| Polyester | 1979.0 g |
| MC3123K2029292-04-21 | 100.0 g |
| Cyasorb UV5411 | 10.5 g |

(continued)

| Sample 3 | |
|---|---|
| Hostavin N20 | 10.5 g |

| Sample 4 | |
|---|---|
| Polyester | 1979.0 g |
| MC3123K2029292-04-21 | 100.0 g |
| Cyasorb UV5411 | 10.5 g |
| Hostavin N30 | 10.5 g |

| Sample 5 | |
|---|---|
| Polyester | 1979.0 g |
| MC3123K2029292-04-21 | 100.0 g |
| Cyasorb UV5411 | 10.5 g |
| Adkastab LA63 | 10.5 g |

| Sample 6 | |
|---|---|
| Polyester | 1979.0 g |
| MC3123K2029292-04-21 | 100.0 g |
| Sanol LS770 | 10.5 g |
| Tinuvin 234 | 10.5 g |

| Sample 7 | |
|---|---|
| Polyester | 1979.0 g |
| MC3123K2029292-04-21 | 100.0 g |
| Sanol LS770 | 10.5 g |
| Cyasorb UV531 | 10.5 g |

| Sample 8 | |
|---|---|
| Polyester | 1968.50 |
| MC3123K2029292-04-21 | 100.0 g |
| Cyasorb UV5411 | 10.5 g |
| Sanol LS770 | 10.5 g |

| Sample 9 | |
|---|---|
| Polyester | 1968.5 g |
| MC3123K2029292-04-21 | 100.0 g |
| Cyasorb UV5411 | 10.5 g |
| Sanol LS770 | 10.5 g |
| Irganox 1010 | 10.5 g |

| Sample 10 | |
|---|---|
| Polyester | 1968.5 g |
| MC3123K2029292-04-21 | 100.0 g |
| Cyasorb UV5411 | 10.5 g |
| Sanol LS770 | 10.5 g |
| Sandostab P-EPQ | 10.5 g |

| Sample 11 | |
|---|---|
| Polyester | 1958.5 g |
| MC3123K2029292-04-21 | 100.0 g |
| Cyasorb UV5411 | 10.5 g |
| Sanol LS770 | 10.5 g |
| Irganox 1010 | 10.5 g |
| Sandostab P-EPQ | 10.5 g |

| Sample 12 | |
|---|---|
| Polyester | 1978.9 g |
| MC3123K2029292-04-21 | 100.0 g |
| Cyasorb UV5411 | 10.5 g |
| Sanol LS770 | 5.3 g |
| Hostavin N30 | 5.3 g |

| Sample 13 | |
|---|---|
| Polyester | 1968.5 g |
| MC3123K2029292-04-21 | 100.0 g |
| Cyasorb UV5411 | 10.5 g |
| Sanol LS770 | 10.5 g |
| Hostavin N30 | 10.5 g |

| Sample 14 | |
|---|---|
| Polyester | 1968.5 g |
| MC3123K2029292-04-21 | 100.0 g |
| Cyasorb UV5411 | 10.5 g |
| Hostavin N20 | 5.3 g |
| Hostavin N30 | 5.3 g |

| Sample 15 | |
|---|---|
| Polyester | 1968.4 g |
| MC3123K2029292-04-21 | 100.0 g |
| Cyasorb UV5411 | 10.5 g |
| Hostavin N20 | 5.3 g |
| Hostavin N30 | 5.3 g |
| Sandostab P-EQP | 10.5 g |

| Sample 16 | |
|---|---|
| Polyester | 1947.5 g |
| MC3123K2029292-04-21 | 100.0 g |
| Cyasorb UV5411 | 21.0 g |
| Sanol LS770 | 10.5 g |
| Hostavin N30 | 10.5 g |
| Sandostab P-EQP | 10.5 g |

Test plaques prepared from these compositions were exposed to a Xenon arc weatherometer according to SAE J1885 as described previously, the resulting data being shown in Table 1 as the "color difference", delta E. Generally, the higher the measured color change, the more visually objectionable the sample appears. As can be seen in Table 1, the color difference after exposure ranged from a low of about 2.16 for Sample 16 to a high of about 3.31 for the control with no UV stabilizers (Sample 1). The novelty and unexpected results of the molding composition is that samples containing the low molecular weight, monomeric HALS (e.g., Sanol LS770 or Hostavin N20) generally showed higher surface gloss values similar to or greater than the blank control, sample 1. This unexpected increase in gloss was completely unexpected and visually most objectionable. Only Samples 4 and 5, which did not contain either one of these additives, visually appeared to show less overall appearance change compared to the control, Sample 1. Specifically, Sample 4 containing Hostavin N30, oligomeric HALS exhibited the lowest visual change and thus the best stability.

Table 1

| Sample No. | 1 | 2 | 3 | 4 | 5 | 6 | 7 | 8 |
|---|---|---|---|---|---|---|---|---|
| Polyester resin | 95.24% | 94.24 | 94.24 | 94.24 | 94.24 | 94.24 | 94.24 | 93.7 |
| Colorant | 4.76 | 4.76 | 4.76 | 4.76 | 4.76 | 4.76 | 4.76 | 4.7 |
| Cyasorb UV5411 | | 0.50 | 0.50 | 0.50 | 0.50 | | | 0.7 |
| Sanol LS770 | | 0.50 | | | | 0.50 | 0.50 | 0.7 |
| Hostavin N20 | | | 0.50 | | | | | |
| Hostavin N30 | | | | 0.50 | | | | |
| Adkastab LA63 | | | | | 0.50 | | | |
| Tinuvin 234 | | | | | | 0.50 | | |
| Cyasorb UV 531 | | | | | | | 0.50 | |
| Delta E* @ 601.6 $KJ/m^2$ | 3.31 | 2.63 | 2.96 | 2.66 | 2.95 | 2.57 | 3.06 | 2.3 |
| Delta L* | -2.43 | -1.78 | -1.95 | -1.72 | -2.21 | -1.93 | -2.12 | -1.5 |
| Delta b* | 2.24 | 1.93 | 2.23 | 2.02 | 1.95 | 1.69 | 2.21 | 1.7 |
| 60° Gloss (%) | 8.0 | 8.3 | 8.6 | 4.3 | 4.0 | 8.0 | 7.4 | 6.1 |
| Sample No. | 9 | 10 | 11 | 12 | 13 | 14 | 15 | 16 |
| Polyester resin | 93.74 | 93.74 | 93.24 | 94.24 | 93.74 | 94.24 | 93.74 | 92.74 |
| Colorant | 4.76 | 4.76 | 4.76 | 4.76 | 4.76 | 4.76 | 4.76 | 4.76 |
| Cyasorb UV5411 | 0.50 | 0.50 | 0.50 | 0.50 | 0.50 | 0.50 | 0.50 | 1.00 |
| Sanol LS770 | 0.50 | 0.50 | 0.50 | 0.25 | 0.50 | | | 0.50 |
| Hostavin N20 | | | | | | 0.25 | 0.25 | |
| Hostavin N30 | | | | 0.25 | 0.50 | 0.25 | 0.25 | 0.50 |
| Adkastab LA63 | | | | | | | | |
| Tinuvin 234 | | | | | | | | |
| Cyasorb UV531 | | | | | | | | |
| Irganox 1010 | 0.50 | | 0.50 | | | | | |
| Sandostab P-EPQ | | 0.50 | 0.50 | | | | 0.50 | 0.50 |
| Delta E* @ 601.6 $kJ/m^2$ | 2.79 | 2.47 | 2.51 | 2.61 | 2.89 | 3.01 | 2.38 | 2.16 |
| Delta L* | -1.80 | -1.50 | -1.33 | -1.64 | -1.98 | -2.14 | -1.46 | -1.29 |
| Delta b* | 2.13 | 1.96 | 2.12 | 2.03 | 2.11 | 2.12 | 1.88 | 1.73 |
| 60° Gloss (%) | 8.3 | 11.8 | 12.5 | 8.5 | 9.3 | 7.9 | 8.7 | 7.1 |

Another surprising and unexpected result was that the type of ultra-violet light absorber had virtually no effect on the UV performance of the resin. Samples 2,6 and 7 contained low molecular weight benzotriazole (Cyasorb UV5411), higher molecular benzotriazole (Tinuvin 234), and benzophenone (Cyasorb UV5311), respectively. Ultra-violet light performance of these three (3) samples were virtually identical both visually and as measured by color difference and gloss change.

Example 2

This set of samples were prepared and tested to further investigate the effects of hindered amine light stabilizer components on the UV stability of the polyester polymer system. In this example, various monomeric and polymeric/oligomeric hindered amines were evaluated to mote filly understand the effects of primarily molecular weight on the UV performance of the total resin system. Furthermore, various moieties substituted on the HALS structure were studied. Similar to Example 1, Example 2, UV light stabilized samples were prepared utilizing Vandar® 9118 natural thermoplastic polyester, a colorant, RC3097K20, and (except Sample 17) various portions of the stabilizing system. Vandar® 9118 thermoplastic polyester resin, available from Hoechst Celanese Corporation, Hoechst Technical Polymers, Summit, NJ 07901, contains about 60 wt % of polyester, about 40 wt. % of an MBS modifier, about 0.1 wt % of Irganox B215, about 0.2 wt % of Irgaphos 168, and about 0.5 wt % of Sandostab P-EPQ.

| Sample 17 | |
|---|---|
| polyester | 2000.0 g |
| RC3097K20 | 100.0 g |

| Sample 18 | |
|---|---|
| polyester | 1979 g |
| RC3097K20 | 100.0 g |
| Cyasorb UV5411 | 10.5 g |
| Hostavin N30 | 10.5 g |

| Sample 19 | |
|---|---|
| polyester | 1947.5 |
| RC3097K20 | 100 |
| Cyasorb UV5411 | 42 |
| Hostavin N30 | 10.5 |

| Sample 20 | |
|---|---|
| polyester | 1947.5 |
| RC3097K20 | 100 |
| Cyasorb UV5411 | 10.5 |
| Hostavin N30 | 42 |

| | |
|---|---|
| Sample 21 | |
| polyester | 1947.5 |
| RC3097K20 | 100 |
| Cyasorb UV5411 | 26.3 |
| Hostavin N30 | 26.3 |

| | |
|---|---|
| Sample 22 | |
| polyester | 1916 |
| RC3097K20 | 100 |
| Cyasorb UV5411 | 42 |
| Hostavin N30 | 42 |

| | |
|---|---|
| Sample 23 | |
| polyester | 1916 |
| RC3097K20 | 100 |
| Hostavin N30 | 42 |
| Tinvin 234 | 42 |

| | |
|---|---|
| Sample 24 | |
| polyester | 1979 |
| RC3097K20 | 100 |
| Cyasorb UV5411 | 10.5 |
| Tinuvin 144 | 10.5 |

| | |
|---|---|
| Sample 25 | |
| polyester | 1947.5 |

(continued)

| Sample 25 | |
|---|---|
| RC3097K20 | 100 |
| Cyasorb UV5411 | 42 |
| Tinuvin 144 | 10.5 |

| Sample 26 | |
|---|---|
| polyester | 1947.5 |
| RC3097K20 | 100 |
| Cyasorb UV5411 | 10.5 |
| Tinuvin 144 | 42 |

| Sample 27 | |
|---|---|
| polyester | 1947.4 |
| RC3097K20 | 100 |
| Cyasorb UV5411 | 26.3 |
| Tinuvin 144 | 26.3 |

| Sample 28 | |
|---|---|
| polyester | 1916 |
| RC3097K20 | 100 |
| Cyasorb UV5411 | 42 |
| Tinuvin 144 | 42 |

| Sample 29 | |
|---|---|
| polyester | 1916 |
| RC3097K20 | 100 |
| Tinuvin 144 | 42 |
| Tinuvin 234 | 42 |

| Sample 30 | |
|---|---|
| polyester | 1979 |
| RC3097K20 | 100 |
| Cyasorb UV5411 | 10.5 |
| Goodrite 3150 | 10.5 |

| Sample 31 | |
|---|---|
| polyester | 1947.5 |
| RC3097K20 | 100 |
| Cyasorb UV5411 | 42 |
| Goodrite 3150 | 10.5 |

| Sample 32 | |
|---|---|
| polyester | 1947.5 |
| RC3097K20 | 100 |
| Cyasorb UV5411 | 10.5 |
| Goodrite 3150 | 42 |

| Sample 33 | |
|---|---|
| polyester | 1947.4 |
| RC3097K20 | 100 |
| Cyasorb UV5411 | 26.3 |
| Goodrite 3150 | 26.3 |

| Sample 34 | |
|---|---|
| polyester | 1916 |
| RC3097K20 | 100 |
| Cyasorb UV5411 | 42 |
| Goodrite 3150 | 42 |

| Sample 35 | |
|---|---|
| polyester | 1916 |
| RC3097K20 | 100 |
| Goodrite 3150 | 42 |
| Tinuvin 234 | 42 |

| Sample 36 | |
|---|---|
| polyester | 1979 |
| RC3097K20 | 100.0 |
| Cyasorb UV5411 | 41.5 |
| Adkastab LA63 | 10.5 |

| Sample 37 | |
|---|---|
| polyester | 1979 |
| RC3097K20 | 100.0 |
| Cyasorb UV5411 | 42.0 |
| Adkastab LA63 | 10.5 |

| Sample 38 | |
|---|---|
| polyester | 1947.5 |

(continued)

| Sample 38 | |
|---|---|
| RC3097K20 | 100.0 |
| Cyasorb UV5411 | 41.5 |
| Adkastab LA63 | 10.5 |

| Sample 39 | |
|---|---|
| polyester | 1947.5 |
| RC3097K20 | 100.0 |
| Cyasorb UV5411 | 41.5 |
| Adkastab LA63 | 42.0 |

| Sample 40 | |
|---|---|
| polyester | 1947.5 |
| RC3097K20 | 100 |
| Cyasorb UV5411 | 26.3 |
| Adkastab LA63 | 26.3 |

| Sample 41 | |
|---|---|
| polyester | 1916.0 |
| RC3097K20 | 100 |
| Cyasorb UV5411 | 42.0 |
| Adkastab LA63 | 42.0 |

| Sample 42 | |
|---|---|
| polyester | 1916.0 |
| RC3097K20 | 100 |
| Adkastab LA63 | 42.0 |
| Tinuvin 234 | 42.0 |

Table 2, below provides the weight percentages, based on 100 weight percent of the sample, of components in the samples.

Table 2

| Ingredient Description | 17 | 18 | 19 | 20 | 21 | 22 | 2 |
|---|---|---|---|---|---|---|---|
| Polyester resin | 95.24% | 94.24 | 92.74 | 92.74 | 92.74 | 91.24 | 91.24 |
| Colorant | 4.76 | 4.76 | 4.76 | 4.76 | 4.76 | 4.76 | 4.76 |
| Cyasorb UV5411 | | 0.50 | 2.00 | 0.50 | 1.25 | 2.00 | |
| Hostavin N30 | | 0.50 | 0.50 | 2.00 | 1.25 | 2.00 | 2.00 |
| Tinuvin 234 | | | | | | | 2.00 |
| Delta E* @ 601.1 kJ/m² | 3.93 | 3.70 | 2.79 | 2.07 | 1.76 | 1.89 | 2.23 |
| Delta L* | -2.39 | -1.65 | -1.06 | -1.01 | -1.01 | -1.45 | -1.84 |
| Delta b* | 2.99 | 3.31 | 2.57 | 1.79 | 1.41 | 1.19 | 1.26 |
| 60° Gloss (%) | 3.2 | 6.4 | 6.1 | 25.9 | 12.8 | 7.9 | 9.2 |

Table 2 (cont'd)

| Ingredient Description | 24 | 25 | 26 | 27 | 28 | 29 |
|---|---|---|---|---|---|---|
| Polyester resin | 94.24 | 92.74 | 92.74 | 92.74 | 91.24 | 91.24 |
| Colorant | 4.76 | 4.76 | 4.76 | 4.76 | 4.76 | 4.76 |
| Cyasorb UV5411 | 0.50 | 2.00 | 0.50 | 1.25 | 2.00 | |
| Tinuvin 144 | 0.50 | 0.50 | 2.00 | 1.25 | 2.00 | 2.00 |
| Tinuvin 234 | | | | | | 2.00 |
| Delta E* @ 601.6 kJ/m² | 1.90 | 1.35 | 2.87 | 2.47 | 1.34 | 0.87 |
| Delta L* | -0.69 | -1.00 | -2.36 | -2.11 | -0.97 | -0.50 |
| Delta b* | 1.74 | 0.87 | 1.61 | 1.25 | 0.89 | 0.63 |
| 60° Gloss (%) | 21.4 | 12.5 | 7.2 | 6.8 | 7.7 | 6.7 |

Table 2 (cont'd)

| Ingredient Description | 30 | 31 | 32 | 33 | 34 | 35 |
|---|---|---|---|---|---|---|
| Polyester resin | 94.24 | 92.74 | 92.74 | 92.74 | 91.24 | 91.24 |
| Colorant | 4.76 | 4.76 | 4.76 | 4.76 | 4.76 | 4.76 |
| Cyasorb UV5411 | 0.50 | 2.00 | 0.50 | 1.25 | 2.00 | |
| Good-Rite 3150 | 0.50 | 0.50 | 2.00 | 1.25 | 2.00 | 2.00 |
| Tinuvin 234 | | | | | | 2.00 |
| Delta E* @ 601.6 kJ/m² | 1.35 | 1.43 | 1.76 | 1.21 | 0.52 | 0.62 |
| Delta L* | -0.21 | -1.23 | -1.40 | -0.88 | -0.08 | -0.05 |
| Delta b* | 1.27 | 0.62 | 1.01 | 0.75 | 0.45 | 0.51 |
| 60° Gloss (%) | 18.8 | 5.2 | 5.6 | 6.5 | 5.5 | 5.6 |

Table 2 (cont'd)

| Ingredient Description | 36 | 37 | 38 | 39 | 40 | 41 |
|---|---|---|---|---|---|---|
| Polyester resin | 94.24 | 92.74 | 92.74 | 92.74 | 91.24 | 91.24 |
| Colorant | 4.76 | 4.76 | 4.76 | 4.76 | 4.76 | 4.76 |
| Cyasorb UV5411 | 0.50 | 2.00 | 0.50 | 1.25 | 2.00 | |
| Adkastab LA-63 | 0.50 | 0.50 | 2.00 | 1.25 | 2.00 | 2.00 |
| Tinuvin 234 | | | | | | 2.00 |
| Delta E* @ 601.6 kJ/m² | 2.33 | 1.51 | 1.93 | 1.56 | 1.76 | 1.86 |
| Delta L* | -0.86 | -1.17 | -1.45 | -1.27 | -1.54 | -1.65 |
| Delta b* | 2.14 | 0.93 | 1.24 | 0.87 | 0.83 | 0.85 |
| 60° Gloss (%) | 11.5 | 15.5 | 19.4 | 14.2 | 3.8 | 3.9 |

It was determined that Hostavin N30 and Adkstab LA-63 (from Table 2, samples 20 and 21), continued to perform well. In addition, Tinuvin 144 with its hindered phenolic antioxidant moiety and Goodrite 3150 with it triazine moiety also performed well. These four (4) HALS compounds were further evaluated to study effects of their concentration on stability.

The results of Table 2 confirm that higher molecular weight HALS compounds and/or ones highly substituted are the keys to achieving good ultra-violet light stability of polyester resins. Additionally, an unexpected result from this experiment was the effect of polymeric/oligomeric HALS concentration and ratio of UV absorber on the surface gloss increase. Samples 18 and 19 with low levels of polymeric/oligomeric HALS, Hostavin N30 showed no gloss increase. Sample 20, with high a level of polymeric/oligomeric HALS, exhibited a very substantial gloss increase. But, using polymeric/oligomeric HALS at a 1:1 ratio with UV absorber, even at the higher level of HALS, eliminated this surface gloss increase. Samples 22, 28, 34 and 40 all passed the 601.6 $kJ/m^2$ exposure requirement. This was evident by measuring values of low color change (ΔE*) and no significant surface gloss increase.

## Claims

1. An ultraviolet light stabilized molding composition, comprising a thermoplastic polyester resin, and a UV light stabilizing system in combination with said polyester resin in an effective amount sufficient to achieve a color difference, as calculated in CIELab units under illuminant "D-65" according to ASTM Standard D-2244, of less than about 2.25 when exposed to 601.6 $kJ/m^2$ irradiation in a Xenon arc weatherometer operated according to SAE J1885, and exhibits a surface gloss retention after irradiation of at least about 7.5%, wherein said UV light stabilizing system, comprises:

   (i) an ultra-violet light absorber;

   (ii) a hindered amine light stabilizer, and

   (iii) an antioxidant.

2. The composition according to Claim 1, wherein the thermoplastic polyester is selected from the group consisting of linear polyalkylene terephthalates, copolyester elastomers, polycarbonates, and mixtures thereof.

3. The composition according to Claim 2, wherein the linear polyalkylene terephthalates is selected from the group consisting of polybutylene terephthalate, poly propylene terephthalate, polyethylene terephthalate and ethylene-1,4-cyclohexylenedimethylene terephthalate.

4. The composition according to Claim 3, wherein the copolyester elastomer is copolyetherester.

5. The composition according to Claim 4, wherein the thermoplastic polyester is a blend of from 0 to about 30 wt % of polybutylene terephthalate, from about 35 to about 70 wt % of polyester elastomer, from 0 to about 30 wt % of polycarbonate, from about 10 to about 50 wt % of MBS, and from about 0.2 to about 1.0 wt % of an antioxidant, based on the total weight of the composition.

6. The composition according to Claim 5, wherein the UV light stabilizing system is present in an amount of from about 0.5 to about 5.0 weight percent, based on the total weight of the composition.

7. The composition according to Claim 6, wherein the UV light stabilizer is present in an amount of from about 0.1 to about 2.0 weight percent, based on the total weight of the composition.

8. The composition according to Claim 7, wherein the hindered amine is present in an amount of from about 0.1 to about 2.0 weight percent, based on the total weight of the composition.

9. The composition according to Claim 8, wherein the relative ratio of hindered amine to ultra-violet light absorber is from about 1:1 to about 1:2, respectively.

10. The composition according to Claim 9, wherein the antioxidant is present in an amount of from about 0.1 to about 1.0 weight percent, based on the total weight of the composition.

11. The composition according to Claim 10, wherein the UV light absorber is a benzophenone selected from the group consisting of 2,4-dihydroxybenzophenone; 2-hydroxy-4-methoxybenzophenone; 2-hydroxy-4-tertbutoxybenzophenone; 2-hydroxy-4-octoxybenzophenone; 2-hydroxy-4-dodecycloxybenzophenone; 2-hydroxy-4-stearoxybenzophenone; 2-hydroxy-4-phcnoxybenzophenone; 2-hydroxy-4-(β-hydroxyethoxy)benzophenone; 2-hydroxy-4-(2'-hydroxy-3'-acryloxypropoxy)benzophenone; 2-hydroxy-4-(2'-hydroxy-3'-methacryloxypropoxyl)benzophenone; 2,2'-dihydroxybenzophenone; 2,2'-dihydroxy-4-methoxybenzophenone; 2,2'-dihydroxy-4-butoxyobenzophenone; 2,2'-dihydroxy-4-octoxybenzophenone; 2,2'-dihydroxy-4-lauroxybenzophenone; 2,2',4,4'-tetrahydroxybenzophenone, 2,2',4'-trihydro-4-methoxybenzophenone; 2-hydroxy-4-methoxy-4'-chlorobenzophenone; 2,2'-dihydroxy-4,4'-dimethyloxybenzophenone; 2-hydroxy-4-methoxy-2'-methyl-4'-hydroxybenzophenone; 2-hydroxy-4-methoxy-4'-tert-butylbenzophenone; 2-hydroxy-4-methoxy-4'-methyl-benzophenone; 2-hydroxy-4,4'-dimethoxybenzophenone;

2-hydrox-4,4',2'-trimethoxybenzophenone; and 2-hydroxy-4-N-octoxybenzophenone.

**12.** The UV light stabilizing system according to Claim 11, wherein the UV light absorber is a benzotriazole selected from the group consisting of 2-(2-hydroxy-5'-methylphenyl)benzotriazlole; 2-(2'-hydroxy-3'-5'-di-tert-butylphenyl)benzotriazole; 2-(2'-hydroxy-3'-5'-di-tert-butylphenyl)-5-chlorobenzotriazole; 2-(2'-hydroxy-3',5'-diphenyl-)-5-benzotriazole; 2-(2'-hydroxy-3'-tertbutyl-5'-methylphenyl)-5-chlorobenzotriazole; 2-(2'-hydroxy-5'-tertbutyl-5'-methylphenyl)benzotriazole; 2-(2'-hydroxy-3'-secbutyl-5'-tertbutylphenyl)benzotriazole; 2-(2'-hydroxy-5-tert-octylphenyl)benzotriazole; 2-(2H-benzotriazol-2-yl)-4,6-bis(1-methyl-1-phenylethyl)-pheniol; and 2-(3',5'-bis(1-methyl-1-phenylethyl)-2'-hydroxyphenyl)benzotriazole.

**13.** The composition according to Claim 12, wherein the hindered amine light stabilizer is selected from the group consisting of 1,1'-[1,2-ethanediyl]-bis[3,3,5,5-tetramethylpoperazione]; dimethlysuccinate polymer with 4-hydroxy-2,2,6,6-tetramethyl-1-piperdine ethanol; bis(1,2,2,6,6-pentamethyl-4-piperdinyl)-sebacate; bis(2,2,6,6-tetramethyl-4-piperidinyl]decanedioate; bis(1,2,2,6,6-pentamethyl-4-piperidinyl)-2-[[3,5-bis(1,1-dimethylethyl)-4-hydroyphenyl]methyl]-2-butylpropanedioate; poly[(2,2,6,6-tetramethyl-4-pipendinyl)iminomethylene(2,2,6,6-tetramethyl-4-piperidinyl)imino(6(octylamino)-1,3,5-triazine-4,2-diyl]]; 2,2,6,6-tetramethyl-4-piperidinyl benzoate; tetrakis(2,2,6,6-tetramethyl-4-piperidinyloxy)silane; bis(1,2,2,6,6-pentamethyl-4-piperidinyl)-(3,5-di-tert-butyl-4-hydroxybenzyl)butylpropanedioate; high melt polymeric/oligomeric hindered amines; 2,2,6,6-tetramethylpiperidine; Goodrite 3150; and [1,2,2,6,6-pentamethyl-4-piperidyl/β,β,β',β'-tetramethyl-3,9-(2,4,8,10-tetraoxaspiro(5,5)undecane)diethyl]-1,2,3,4-butanetetracarboxylate.

**14.** The composition according to Claim 13, wherein the antioxidant is selected from the group consisting of tetrakis(methylene(3,5-di-t-butyl-4-hydroxyhydrocinnamate)] methane and (tetrakis(2,4-di-tert-butylphenyl)4,4-biphenyldiphosphonite].

**15.** The composition according to Claim 14, which further comprises an impact modifier.

**16.** The composition according to Claim 15, wherein the molding composition is suitable for the preparation of molded parts suitable for UV light environments.

**17.** An ultraviolet light stabilized molding composition, comprising a thermoplastic polyester comprising from 0 to about 30 wt % of polyalkylene terephthalate, from about 55 to about 65 wt % of polyester elastomer, from 0 to about 15 wt % of polycarbonate, from about 15 to about 45 wt % of MBS, and from about 0.2 to about 0.8 wt % of the antioxidant; and a UV light stabilizing system in combination with the said polyester in an effective amount sufficient to achieve a color difference, as calculated in CIELab units under illumninant "D-65" according to ASTM Standard D-2244, of about 2.16 when exposed to 601.6 kJ/$m^2$ irradiation in a Xenon arc weatherometer operated according to SAE J1885, and exhibits a surface gloss retention after irradiation of about 7.1%, wherein said stabilizing system comprises:

(i) from about 0.5 to about 5.0 wt % of an ultra-violet light absorber selected from the group consisting of benzotriazoles and benzophenones;

(ii) from about 0.5 to about 5.0 wt % of a hindered amine light stabilizer selected from the group consisting of 1,1'-[1,2-ethanediyl]-bis[3,3,5,5-tetramethylpoperazione]; dimethlysuccinate polymer with 4-hydroxy-2,2,6,6-tetramethyl-1-piperdine ethanol; bis(1,2,2,6,6-pentamethyl-4-piperdinyl)-sebacate; bis[2,2,6,6-tetramethyl-4-piperidinyl]decanedioate; bis(1,2,2,6,6-pentamethyl-4-piperidinyl)-2-[[3,5-bis(1,1-dimethylethyl)-4-hydroyphenyl]methyl]-2-butylpropanedioate; poly((2,2,6,6-tetramethyl-4-piperidinyl)iminomethylene(2,2,6,6-tetramethyl-4-piperidinyl)imino[6(octylamino)-1,3,5-triazine-4,2-diyl]]; 2,2,6,6-tetramethyl-4-piperidinyl benzoate; tetrakis(2,2,6,6-tetramethyl-4-piperidinyloxy)silane; bis(1,2,2,6,6-pentamethyl-4-piperidinyl)-(3,5-di-tert-butyl-4-hydroxybenzyl)butylpropanedioate; high melt polymeric/oligomeric hindered amines; 2,2,6,6-tetramethylpiperidine; Goodrite 3150; and [1,2,2,6,6-pentamethyl-4-piperidyl/β,β,β',β'-tetramethyl-3,9-(2,4,8,10-tetraoxaspiro(5,5)undecane)diethyl]-1,2,3,4-butanetetracarboxylate; and

(iii) from about 0.1 to about 1.0 wt. % of an antioxidant selected from the group consisting of tetrakis(methylene(3,5-di-t-butyl-4-hydroxyhydrocinnaniate)] methane and (tetrakis(2,4-di-tert-butylphenyl)4,4-biphenyldiphosphonite].

**18.** The composition according to Claim 17, wherein the benzophenone selected from the group consisting of 2,4-dihydroxybenzophenone; 2-hydroxy-4-methoxybenzophenone; 2-hydroxy-4-tertbutoxybenzophenone; 2-hydroxy-4-octoxybenzophenone; 2-hydroxy-4-dodecycloxybenzophenone; 2-hydroxy-4-stearoxybenzophenone; 2-hydroxy-4-phenoxybeazophenone; 2-hydroxy-4-(β-hydroxyethoxy)benzophenone; 2-hydroxy-4-(2'-hydroxy-3'-acryloxypropoxy)benzophenone; 2-hydroxy-4-(2'-hydroxy-3'-methacryloxypropoxyl)benzophenone; 2,2'-dihydroxybenzophenone; 2,2'-dihydroxy-4-methoxybenzophenone; 2,2'-dihydroxy-4-butoxyobenzophenone; 2,2'-dihydroxy-4-octoxybenzophenone; 2,2'-dihydroxy-4-lauroxybenzophenone; 2,2,4,4'-tetrahydroxybeniophenone; 2,2',4'-trihydro-4-methoxybenzophenone; 2-hydroxy-4-methoxy-4'-chlorobenzophenone; 2,2'-dihydroxy-4,4'-dimethyloxybenzophenone; 2-hydroxy-4-methoxy-2'-methyl-4'-hydroxybenzophenone; 2-hydroxy-4-methoxy-4'-tert-butylbenzophenone; 2-hydroxy-4-methoxy-4'-methyl-benzophenone; 2-hydroxy-4,4'-dimethoxybenzophenone; 2-hydrox-4,4',2'-trimethoxybenzophenone; and 2-hydroxy-4-N-octoxybenzophenone.

**19.** The composition according to Claim 18, wherein the benzotriazole is selected from the group consisting of 2-(2'-hydroxy-5'-methylphenyl)benzotriazlole; 2-(2'-hydroxy-3'-5'-di-tert-butylphenyl)benzotriazole; 2-(2'-hydroxy-3'-5'-di-tert-butylphenyl)-5-chlorobenzotriazole; 2-(2'-hydroxy-3',5'-diphenyl-)-5-benzotriazole; 2-(2'-hydroxy-3'-tertbutyl-5'-methylphenyl)-5-chlorobenzotriazole; 2-(2'-hydroxy-5'-tertbutyl-5'-methylphenyl)benzotriazole; 2-(2'-hydroxy-3'-secbutyl-5'-tertbutylphenyl)benzotriazole; 2-)2'-hydroxy-5-tert-octylphenyl)benzotriazole; 2-(2H-benzotriazol-2-yl)-4,6-bis(1-methyl-1-phenylethyl)-pheniol; and 2-(3',5'-bis(1-methyl-1-phenylethyl)-2'-hydroxyphenyl)benzotriazole.

**20.** The composition according to Claim 19, further comprising an impact modifier.

**21.** The composition according to Claim 20, wherein the molding composition is suitable for the preparation of molded parts suitable for UV light environments.

**22.** An ultraviolet light stabilized molding composition, comprising a thermoplastic polyester comprising from 0 to about 25 wt % of the polyalkylene terephthalate, about 60 wt % of the polyester elastomer, from 0 to about 10 wt % of polycarbonate, from about 20 to about 40 wt % of MBS, and about 0.6 wt % of the antioxidant; and a UV light stabilizing system in combination with the said polyester in an effective amount sufficient to achieve a color difference, as calculated in CIELab units under illuminant "D-65" according to ASTM Standard D-2244, of about 2.16 when exposed to 601.6 kJ/$m^2$ irradiation in a Xenon arc weatherometer operated according to SAE 11885, and exhibits a surface gloss retention after irradiation of about 7.1%, wherein said stabilizing system comprises:

(i) from about 0.5 to about 5.0 wt % of an ultra-violet light absorber selected from the group consisting of 2,4-dihydroxybenzophenone; 2-hydroxy-4-methoxybenzophenone; 2-hydroxy-4-tertbutoxybenzophenone; 2-hydroxy-4-octoxybenzophenone; 2-hydroxy-4-dodecycloxybenzophenone; 2-hydroxy-4-stearoxybenzophenone; 2-hydroxy-4-phenoxybenzophenone; 2-hydroxy-4-(β-hydroxyethoxy)benzophenone; 2-hydroxy-4-(2'-hydroxy-3'-acryloxypropoxy)benzophenone; 2-hydroxy-4-(2'-hydroxy-3'-methacryloxypropoxyl)benzophenone; 2,2'-dihydroxybenzophenone; 2,2'-dihydroxy-4-methoxybenzophenone; 2,2-dihydroxy-4-butoxyobenzophenone; 2,2'-dihydroxy-4-octoxybenzophenone; 2,2'-dihydroxy-4-lauroxybenzophenone; 2,2',4,4'-tetrahydroxybenzophenone; 2,2',4'-trihydro-4-methoxybenzophenone; 2-hydroxy-4-methoxy-4'-chlorobenzophenone; 2,2'-dihydroxy-4,4'-dimethyloxybenzophenone; 2-hydroxy-4-methoxy-2'-methyl-4'-hydroxybenzophenone; 2-hydroxy-4-methoxy-4'-tert-butylbenzophenone; 2-hydroxy-4-methoxy-4'-methyl-benzophenone; 2-hydroxy-4,4'-dimethoxybenzophenone; 2-hydrox-4,4',2-trimethoxybenzophenone; 2-hydroxy-4-N-octoxybenzophenone; 2-(2'-hydroxy-5'-methylphenyl)benzotriazlole; 2-(2'-hydroxy-3'-5'-di-tert-butylphenyl)benzotriazole; 2-(2'-hydroxy-3'-5'-di-tert-butylphenyl)-5-chlorobenzotriazole; 2-(2'-hydroxy-3',5'-diphenyl-)-5-benzotriazole; 2-(2'-hydroxy-3'-tertbutyl-5'-methylphenyl)-5-chlorobenzotriazole; 2-(2'-hydroxy-5'-tertbutyl-5'-methylphenyl)benzotriazole; 2-(2'-hydroxy-3'-secbutyl-5'-tertbutylphenyl)benzotriazole; 2-(2'-hydroxy-5-tert-octylphenyl)benzotriazole; 2-(2H-benzotriazol-2-yl)-4,6-bis(1-methyl-1-phenylethyl)-pheniol; and 2-(3',5'-bis(1-methyl-1-phenylethyl)-2'-hydroxyphenyl)benzotriazole;

(ii) from about 0.5 to about 5.0 wt % of a hindered amine light stabilizer selected from the group consisting of 1,1'-[1,2-ethanediyl]-bis(3,3,5,5-tetramethylpoperazione]; dimethlysuccinate polymer with 4-hydroxy-2,2,6,6-tetramethyl-1-piperdine ethanol; bis(1,2,2,6,6-pentamethyl-4-piperdinyl)-sebacate; bis[2,2,6,6-tetramethyl-4-piperidinyl]decanedioate; bis(1,2,2,6,6-pentamethyl-4-piperidinyl)-2-[[3,5-bis(1,1-dimethylethyl)-4-hydroyphenyl]methyl]-2-butylpropanedioate; poly[(2,2,6,6-tetramethyl-4-piperidinyl)iminomethylene(2,2,6,6-tetramethyl-4-piperidinyl)imino[6(octylamino)-1,3,5-triazine-4,2-diyl]]; 2,2,6,6-tetramethyl-4-piperidinyl benzoate; tetrakis(2,2,6,6-tetramethyl-4-piperidinyloxy)silane; bis(1,2,2,6,6-pentamethyl-4-piperidinyl)-(3,5-di-tert-butyl-4-hydroxybenzyl)butylpropanedioate; high melt polymeric/oligomeric hindered antines; 2,2,6,6-tetramethylpiperidine; Goodrite 3150; and [1,2,2,6,6-pentamethyl-4-piperidyl/β,β,β',β'-tetramethyl-3,9-(2,4,8,10-tetraoxaspiro(5,5)undecane)diethyl]-1,2,3,4-butanetetracarboxylate; and

(iii) from about 0.1 to about 1.0 wt. % of an antioxidant selected from the group consisting of tetrakis(methylene(3,5-di-t-butyl-4-hydroxyhydrocinnamate)] methane and [tetrakis(2,4-di-tert-butylphenyl)4,4-biphenyldiphosphonite],

wherein the molding composition is suitable for the preparation of molded parts suitable for UV light environments.

**23.** A UV stabilizing system suitable for thermoplastic polyester resin compositions, comprising:

(i) from about 0.5 to about 5.0 wt % of an ultra-violet light absorber selected from the group consisting of 2,4-dihydroxybenzophenone; 2-hydroxy-4-methoxybenzophenone; 2-hydroxy-4-tertbutoxybenzophenone; 2-hydroxy-4-octoxybenzophenone; 2-hydroxy-4-dodecycloxybenzophenone; 2-hydroxy-4-stearoxybenzophenone; 2-hydroxy-4-phenoxybenzophenone; 2-hydroxy-4-(β-hydroxyethoxy)benzophenone; 2-hydroxy-4-(2'-hydroxy-3'-acryloxypropoxy)benzophenone; 2-hydroxy-4-(2'-hydroxy-3'-methacryloxypropoxyl)benzophenone; 2,2'-dihydroxybenzophenone; 2,2'-dihydroxy-4-methoxybenzophenone; 2,2'-dihydroxy-4-butoxyobenzophenone; 2,2'-dihydroxy-4-octoxybenzophenone; 2,2'-dihydroxy-4-lauroxybenzophenone; 2,2',4,4'-tetrahydroxybenzophenone; 2,2',4'-trihydro-4-methoxybenzophenone; 2-hydroxy-4-methoxy-4'-chlorobenzophenone; 2,2'-dihydroxy-4,4'-dimethyloxybenzophenone; 2-hydroxy-4-methoxy-2'-methyl-4'-hydroxybenzophenone; 2-hydroxy-4-methoxy-4'-tert-butylbenzophenone; 2-hydroxy-4-methoxy-4'-methyl-benzophenone; 2-hydroxy-4,4'-dimethoxybenzophenone; 2-hydrox-4,4',2'-trimethoxybenzophenone; 2-hydroxy-4-N-octoxybenzophenone; 2-(2'-hydroxy-5'-methylphenyl)benzotriazlole; 2-(2'-hydroxy-3'-5'-di-tert-butylphenyl)benzotriazole; 2-(2'-hydroxy-3'-5'-di-tert-butylphenyl)-5-chlorobenzotriazole; 2-(2'-hydroxy-3',5'-diphenyl-)-5-benzotriazole; 2-(2'-hydroxy-3'-tertbutyl-5'-methylphenyl)-5-chlorobenzotriazole; 2-(2'-hydroxy-5'-tertbutyl-5'-methylphenyl)benzotriazole; 2-(2'-hydroxy-3'-secbutyl-5'-tertbutylphenyl)benzotriazole; 2-(2'-hydroxy-5-tert-octylphenyl)benzotriazole; 2-(2H-benzotriazol-2-yl)-4,6-bis(1-methyl-1-phenylethyl)-pheniol; and 2-(3',5'-bis(1-methyl-1-phenylethyl)-2'-hydroxyphenyl)benzotriazole;

(ii) from about 0.5 to about 5.0 wt % of a hindered amine light stabilizer selected from the group consisting of 1,1'-[1,2-ethanediyl]-bis[3,3,5,5-tetramethylpoperazione]; dimethlysuccinate polymer with 4-hydroxy-2,2,6,6-tetramethyl-1-piperdine ethanol; bis(1,2,2,6,6-pentamethyl-4-piperdinyl)-sebacate; bis[2,2,6,6-tetramethyl-4-piperidinyl]decanedioate; bis(1,2,2,6,6-pentamethyl-4-piperidinyl)-2-[[3,5-bis(1,1-dimethylethyl)-4-hydroyphenyl]methyl]-2-butylpropanedioate; poly[(2,2,6,6-tetramethyl-4-piperidinyl)iminomethylene(2,2,6,6-tetramethyl-4-piperidinyl)imino[6(octylamino)-1,3,5-triazine-4,2-diyl]]; 2,2,6,6-tetramethyl-4-piperidinyl benzoate; tetrakis(2,2,6,6-tetramethyl-4-piperidinyloxy)silane; bis(1,2,2,6,6-pentamethyl-4-piperidinyl)-(3,5-di-tert-butyl-4-hydroxybenzyl)butylpropanedioate; high melt polymeric/oligomeric hindered amines; 2,2,6,6-tetramethylpiperidine; Goodrite 3150; and [1,2,2,6,6-tetraoxaspiro(5,5)undecane)diethyl]-1,2,3,4-butanetetracarboxylate; and

(iii) from about 0.1 to about 1.0 wt. % of an antioxidant selected from the group consisting of tetrakis[methylene(3,5-di-t-butyl-4-hydroxyhydrocinnamate)] methane and [tetrakis(2,4-di-tert-butylphenyl)4,4-biphenyldiphosphonite],

wherein the system is characterized as achieving a color difference, as calculated in CIELab units under illuminant "D-65" according to ASTM Standard D-2244, of about 2.16 when exposed to 601.6 $kJ/m^2$ irradiation in a Xenon arc weatherometer operated according to SAE J1885, and exhibits a surface gloss retention after irradiation of about 7.1%

European Patent Office

# EUROPEAN SEARCH REPORT

Application Number
EP 98 30 3247

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 653 461 A (KIRIN) 17 May 1995<br>* page 2, line 49 - line 50 *<br>* page 5, line 57 - page 6, line 5 *<br>* page 15, line 21 - line 39 *<br>* claim 1 *<br>--- | 1-3,7-9,<br>12,13 | C08K5/00<br>C08L67/02<br>//(C08K5/00,<br>5:13,5:3475,<br>5:3435) |
| A | EP 0 368 637 A (HOECHST CELANESE)<br>16 May 1990<br>* claims 1,2,6,9,10,22; example IV9; table IV *<br>--- | 1,2,4,<br>6-8,11,<br>13-15,<br>17,18,<br>20,23 | |
| A | DATABASE WPI<br>Section Ch, Week 9305<br>Derwent Publications Ltd., London, GB;<br>Class A23, AN 93-039412<br>XP002079040<br>& JP 04 363357 A (KANEKA CORP)<br>, 16 December 1992<br>formulas 1-3<br>----- | 1,2,12,<br>13 | |

| TECHNICAL FIELDS SEARCHED (Int.Cl.6) |
|---|
| C08K<br>C08L |

The present search report has been drawn up for all claims

| Place of search | Date of completion of the search | Examiner |
|---|---|---|
| THE HAGUE | 29 September 1998 | Engel, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 98 30 3247

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-1998

| Patent document cited in search report | Publication date | Patent family member(s) | Publication date |
|---|---|---|---|
| EP 653461 A | 17-05-1995 | JP 7133357 A | 23-05-1995 |
| | | US 5714220 A | 03-02-1998 |
| EP 368637 A | 16-05-1990 | US 5032631 A | 16-07-1991 |
| | | AT 117337 T | 15-02-1995 |
| | | CA 2001624 A | 10-05-1990 |
| | | DE 68920705 D | 02-03-1995 |
| | | DE 68920705 T | 29-06-1995 |
| | | JP 2191660 A | 27-07-1990 |
| | | JP 2661755 B | 08-10-1997 |

EPO FORM P0459

For more details about this annex : see Official Journal of the European Patent Office, No. 12/82